# EUROPEAN PATENT APPLICATION

(11) **EP 4 184 379 A1**
(43) Date of publication of application: **24.05.2023**
(21) Application number: 21842264.0
(22) Date of filing: 16.07.2021
(51) Int. Cl.: G06F 40/284, G06F 9/451, G06F 3/0481

(54) **INFORMATION DISPLAY METHOD AND APPARATUS, AND ELECTRONIC DEVICE**

(30) Priority: 17.07.2020 CN 202010693611
(71) Applicant: Vivo Mobile Communication Co., Ltd., Dongguan, Guangdong 523863 (CN)
(72) Inventor: XUE, Xinglong, Dongguan, Guangdong 523863 (CN)
(74) Representative: Lavoix
(86) International application number: PCT/CN2021/106723
(87) International publication number: WO 2022/012658

(57) **Abstract**

This application discloses an information display method and apparatus, and an electronic device, and belongs to the field of communication technologies. The information display method includes: determining a first body information and a first auxiliary information of a first notification information received; and displaying, in a case that the first notification information and a second notification information previously received are associated with a same event, the first body information and the first auxiliary information in place of a second body information and a second auxiliary information of the second notification information.

## Description

### CROSS-REFERENCE TO RELATED APPLICATIONS

This application claims priority to Chinese Patent Application No. 202010693611.4 filed on July 17, 2020, which is incorporated herein by reference in its entirety.

### TECHNICAL FIELD

This application relates to the field of communication technologies, and specifically, to an information display method and apparatus, and an electronic device.

### BACKGROUND

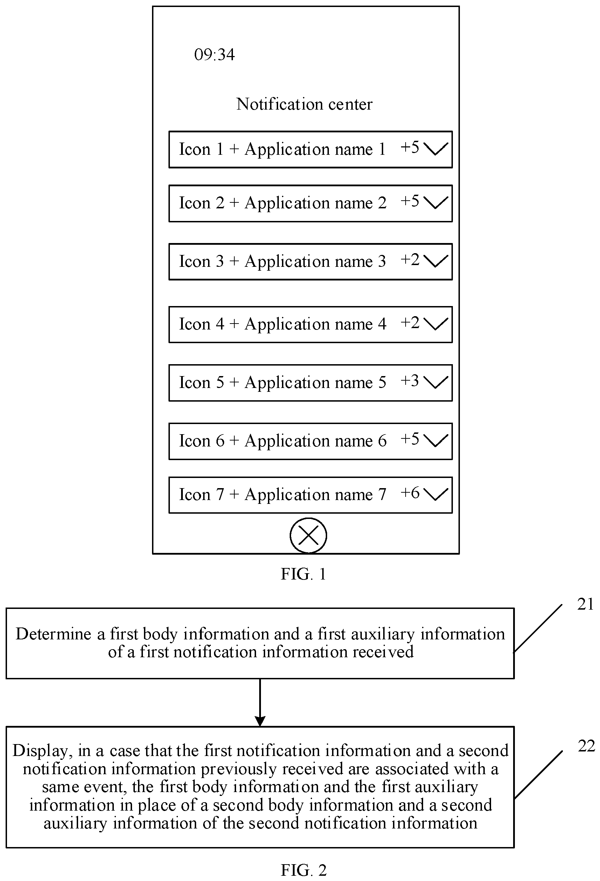

At present, a third-party application can send a push (push) message to a user. The message generally includes an application icon (icon), an application name, a main title, a subtitle, a push time, and the like, as shown in FIG. 1.

However, exiting notification forms are undiversified, with poor text reading experience, and more importantly, poor timeliness. Most notifications are pushed to the user at a certain moment, and the information does not change with the user scenario or time. As a result, the notification bar looks more like a trash can, and the most frequent operation that the user performs every time he or she goes to the notification center is to click "Clear Notifications".

To obtain effective information, the user needs to search for, understand, and disassemble complex and redundant information in the notifications, resulting in a poor user experience. In particular, high-frequency and just-needed scenarios such as ride-hailing, take-out, and ticketing notifications are often mixed with marketing and operation notifications such as discounts, promotions, and campaigns pushed by third parties, are difficult to identify and inconvenient for the user to obtain.

It can be seen from the above that existing information display solutions have defects such as undiversified display modes, redundancy, and inconvenience for the user to find required information.

### SUMMARY

An objective of embodiments of this application is to provide an information display method and apparatus, and an electronic device, which can solve the problems of redundancy and inconvenience for a user to find required information in existing information display solutions.

To resolve the above technical problems, this application is implemented as follows:

According to a first aspect, an embodiment of this application provides an information display method. The method includes:
determining a first body information and a first auxiliary information of a first notification information received; and
displaying, in a case that the first notification information and a second notification information previously received are associated with a same event, the first body information and the first auxiliary information in place of a second body information and a second auxiliary information of the second notification information.

According to a second aspect, an embodiment of this application provides an information display apparatus. The apparatus includes:
a first determining module, configured to determine a first body information and a first auxiliary information of a first notification information received; and
a first display module, configured to display, in a case that the first notification information and a second notification information previously received are associated with a same event, the first body information and the first auxiliary information in place of a second body information and a second auxiliary information of the second notification information.

According to a third aspect, an embodiment of this application provides an electronic device. The electronic device includes a processor, a memory, and a program or instruction stored in the memory and executable on the processor, the program or instruction, when executed by the processor, implementing steps of the method according to the first aspect.

According to a fourth aspect, an embodiment of this application provides a readable storage medium, storing a program or instruction, the program or instruction, when executed by a processor, implementing steps of the method according to the first aspect.

According to a fifth aspect, an embodiment of this application provides a chip, including a processor and a communication interface, where the communication interface is coupled to the processor, and the processor is configured to run a program or instruction, to implement the method according to the first aspect.

According to a sixth aspect, an embodiment of this application provides a computer software product, stored in a non-volatile storage medium, configured to be executed by at least one processor to implement steps of the method according to the first aspect.

According to a seventh aspect, an embodiment of this application provides an electronic device, configured to perform the method according to the first aspect.

In the embodiments of this application, a first body information and a first auxiliary information of a first notification information received are determined; and in a case that the first notification information and a second notification information previously received are associated with a same event, the first body information and the first auxiliary information are displayed in place of a second body information and a second auxiliary information of the second notification information. In this way, a plurality of independent notifications of a same scene are sorted out, and the notifications are linked according to clues of scene changes, providing the user with a complete and dynamic notification information display solution. Information display logic is improved to provide the user with a scene-based information service, so as to reduce the costs of conveying information, avoid the display of unnecessary information, and make it more convenient for the user to use, thereby well solving the problems of redundancy and inconvenience for the user to find required information in existing information display solutions.

### BRIEF DESCRIPTION OF THE DRAWINGS

FIG. 1 is a schematic diagram of displaying a notification information in the prior art.
FIG. 2 is a schematic flowchart of an information display method according to an embodiment of this application.
FIG. 3 is a schematic diagram of a specific implementation process of an information display method according to an embodiment of this application.
FIG. 4 is a schematic diagram 1 of processing and displaying a notification information according to an embodiment of this application.
FIG. 5 is a schematic diagram 2 of processing and displaying a notification information according to an embodiment of this application.
FIG. 6 is a schematic diagram 3 of processing and displaying a notification information according to an embodiment of this application.
FIG. 7 is a schematic diagram 1 of a display region of a processed notification information according to an embodiment of this application.
FIG. 8 is a schematic diagram 2 of a display region of a processed notification information according to an embodiment of this application.
FIG. 9 is a schematic diagram 1 of displaying a notification information in an unfolding manner according to an embodiment of this application.
FIG. 10 is a schematic diagram 2 of displaying a notification information in an unfolding manner according to an embodiment of this application.
FIG. 11 is a schematic diagram of an online ride-hailing process according to an embodiment of this application.
FIG. 12 is a schematic diagram of a processed online ride-hailing notification information according to an embodiment of this application.
FIG. 13 is a schematic diagram 1 of displaying a processed online ride-hailing notification information according to an embodiment of this application.
FIG. 14 is a schematic diagram 2 of displaying a processed online ride-hailing notification information according to an embodiment of this application.
FIG. 15 is a schematic diagram of an airplane boarding process according to an embodiment of this application.
FIG. 16 is a schematic diagram of a processed airplane notification information according to an embodiment of this application.
FIG. 17 is a schematic diagram 1 of displaying a processed airplane notification information according to an embodiment of this application.
FIG. 18 is a schematic diagram 2 of displaying a processed airplane notification information according to an embodiment of this application.
FIG. 19 is a schematic structural diagram of an information display apparatus according to an embodiment of this application.
FIG. 20 is a schematic structural diagram 1 of an electronic device according to an embodiment of this application.
FIG. 21 is a schematic structural diagram 2 of an electronic device according to an embodiment of this application.

### DETAILED DESCRIPTION

The following clearly and completely describes the technical solutions in the embodiments of this application with reference to the accompanying drawings in the embodiments of this application. Apparently, the described embodiments are some embodiments of this application rather than all of the embodiments. All other embodiments obtained by a person of ordinary skill in the art based on the embodiments of this application without creative efforts shall fall within the protection scope of this application.

In the specification and claims of this application, terms "first", "second", and so on are used to distinguish similar objects, but are not used to describe a specific sequence or order. It should be understood that the data termed in such a way are interchangeable in proper circumstances, so that the embodiments of this application can be implemented in other orders than the order illustrated or described herein. Objects distinguished by "first", "second", and the like are usually one type, and the number of objects is not limited. For example, the first object may be one or more than one. In addition, in the specification and the claims, "and/or" means at least one of the connected objects, and the character "/" generally indicates an "or" relationship between the associated objects.

An information display method provided in the embodiments of this application is described in detail below through specific embodiments and application scenarios thereof with reference to the accompanying drawings.

The information display method provided in this embodiment of this application, as shown in FIG. 2, includes:
Step 21: Determine a first body information and a first auxiliary information of a first notification information received.

The first auxiliary information serves as an auxiliary instruction of the first body information.

Specifically, the determining a first body information of a first notification information received may include: obtaining a first preset information in the first notification information, where the first preset information includes digit information and/or letter information; and determining the first preset information most repeated in the first notification information as the first body information, or, determining the first preset information ranking first in the first notification information as the first body information.

In addition, the determining a first auxiliary information of a first notification information received includes: obtaining a second preset information adjacent to the first body information, where the second preset information includes at least one of a verb information, a conjunction information, or a particle information, and does not include an adjective information and an adverb information; and determining the second preset information as the first auxiliary information of the first notification information.

For example, if an online ride-hailing notification information is "The express driver (Guangdong BDTXXXX) is in a hurry to come. Please be patient. If you no longer need this ride, you can cancel it for free before 22:04", the extracted first body information is "Guangdong BDTXXXX", and the extracted first auxiliary information is "the driver is in a hurry to come".

Step 22: Display, in a case that the first notification information and a second notification information previously received are associated with a same event, the first body information and the first auxiliary information in place of a second body information and a second auxiliary information of the second notification information.

Further, before the displaying the first body information and the first auxiliary information in place of a second body information and a second auxiliary information of the second notification information, the method further includes: determining whether the first notification information is a preset information; and the displaying, in a case that the first notification information and a second notification information previously received are associated with a same event, the first body information and the first auxiliary information in place of a second body information and a second auxiliary information of the second notification information includes: displaying the first body information and the first auxiliary information in place of the second body information and the second auxiliary information of the second notification information, in a case that the first notification information is a preset type information, and the first notification information and the second notification information previously received are associated with the same event.

The preset information may refer to a preset information of a preset type. The preset type may be an information type set by a user that is considered to be important, or an information type autonomously obtained by a terminal according to habit information of the user or information provided by a network, which is not limited herein.

In this embodiment of this application, the first body information and the first auxiliary information are displayed according to a preset rule; and/or the second body information and the second auxiliary information are displayed according to a preset rule; where the preset rule includes: displaying, in a case that a total number of character strings of the body information and the auxiliary information is greater than a first threshold, the body information and the auxiliary information in an up-down distribution manner; and displaying, in a case that the total number of character strings of the body information and the auxiliary information is less than or equal to the first threshold, the body information and the auxiliary information in an left-right distribution manner.

In this way, the display of the information can be more concise, which is convenient for the user to view. The first threshold may be 4.

Further, in a case that the second notification information is a notification information ranking first corresponding to the event, and before the determining a first body information and a first auxiliary information of a first notification information received, the method further includes: determining whether the second notification information is a preset type information; and displaying, in a case that the second notification information is the preset type information, the second body information and the second auxiliary information in a preset region; where the preset region includes at least one of a top region of a notification center interface or a preset display region of a desktop interface.

The preset information may refer to a preset information of a preset type. The preset type may be an information type set by a user that is considered to be important, or an information type autonomously obtained by a terminal according to habit information of the user or information provided by a network, which is not limited herein.

In this way, important information can be processed and displayed for the user to find and view.

The preset display region may refer to a region that does not conflict with the display of other information (any information other than the second body information and the second auxiliary information, including text, number, icon and other information) on the desktop interface.

Further, after displaying the body information and the auxiliary information, the method further includes: in response to an unfolding operation for the body information and the auxiliary information, displaying a notification information in a presentation region including the display region of the body information and the auxiliary information; where the body information is a first body information, the auxiliary information is a first auxiliary information, and the notification information is a first notification information; or the body information is a second body information, the auxiliary information is a second auxiliary information, and the notification information is a second notification information.

In this way, it is convenient for the user to carefully view a required notification information.

In the embodiments of this application, a first body information and a first auxiliary information of a first notification information received are determined; and in a case that the first notification information and a second notification information previously received are associated with a same event, the first body information and the first auxiliary information are displayed in place of a second body information and a second auxiliary information of the second notification information. In this way, a plurality of independent notifications of a same scene are sorted out, and the notifications are linked according to clues of scene changes, providing the user with a complete and dynamic notification information display solution. Information display logic is improved to provide the user with a scene-based information service, so as to reduce the costs of conveying information, avoid the display of unnecessary information, and make it more convenient for the user to use, thereby well solving the problems of redundancy and inconvenience for the user to find required information in existing information display solutions.

The information display method provided in the embodiments of this application is further illustrated below.

For the foregoing technical problems, to improve a table and row form and display logic of the notification information, provide the user with a scene-based information service, and reduce the costs of conveying information, the embodiments of this application provide an information display method, including:
1. Classify and sort out a plurality of independent notification information of a same scene, and connect the notification information according to clues of scene changes, to provide the user with a complete and dynamic notification solution. 2. Perform information analysis and visual reconstruction processing on a notification content, to focus on most noteworthy information. 3. Formulate different display solutions according to the scene changes, to prevent the user from missing important information.

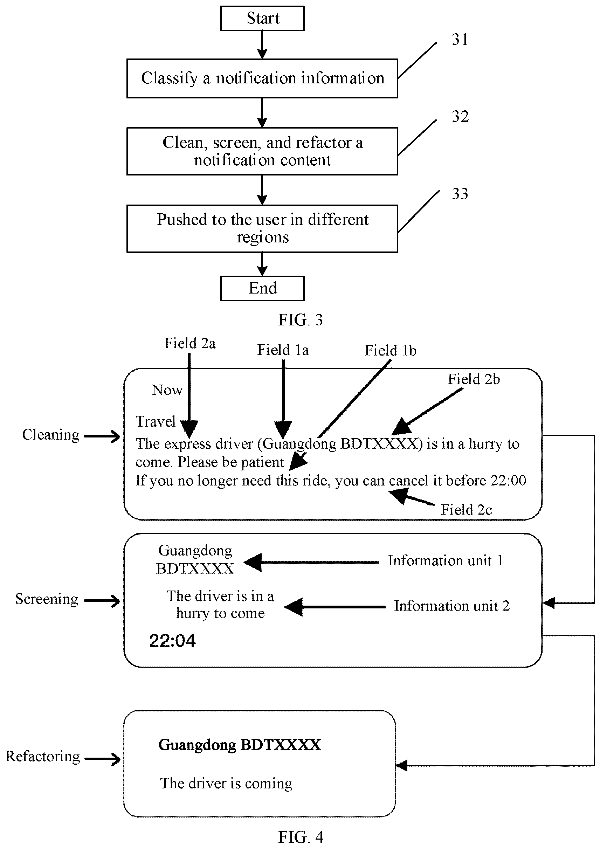

Specifically, the solutions provided in the embodiments of this application may be shown in FIG. 3, including:
Step 31: Classify a notification information (specifically, message notifications can be divided into N types); for example:
   Important notifications include:
      1. Instant messaging (instant messaging, IM) message: chat information, including private chats, group chats, or the like, not including private messages, advertisements, or the like pushed to the user by official accounts or merchants in batches;
      2. Reminders set by the user: reminder information that the user actively sets in an application (application, app) and for which a push can be received for sure, for example: check-in and punch-in reminders that are set; ticket check, arrival, delay, and other itinerary notifications generated by an itinerary notification or travel service; broadcast reminders and book updates that are actively set; commodity or airline ticket price reduction reminders, commodity group opening reminders that are set, or the like;
      3. Logistics and order information: including receipt, delivery, signature, and pick-up notices; order, after-sales, processing, billing information, or the like;
   Unimportant notifications include:
      1. News information: information not actively subscribed by the user, such as Weibo, information, news, reviews, novels, advertisements, videos, audios, live broadcasts, or the like;
      2. Promotions and Recommendations: product promotion, publicity, discounts, red envelopes, coupons, cash rebates and merchant value-added service information, store recommendation information, or the like;
      3. Social moments: add friends, be liked, be @ (which can also be understood as being associated), comment, leave a message, follow, forward, or the like;
      4. Other notifications.
Step 32: Clean, screen, and refactor a notification content;
   (1) Cleaning: Clean information in to-be-optimized notifications (that is, a notification information belonging to the foregoing preset type information) in a targeted manner. Specifically, two types of "fields" can be extracted from the notification information:
      "field 1": extract numbers and letters in the notifications, which may be: a pure number string, a pure letter string, a mixed number and letter string, time, temperature, height, area, volume, or the like; and
      "field 2": extract two words adjacent to the field 1;
   (2) Screening: Screen the two cleaned fields to form an "information unit". After screening, each notification content shall not have more than two information units;
      "information unit 1": a most repeated number string or letter string in the field 1; and if there are no repeated fields, take the field that first occurs; and
      "information unit 2": take two words adjacent to the information unit 1, including verbs, conjunctions, and auxiliary words in the middle of the words, not including adjectives and adverbs;
   (3) Refactoring: Use the information unit 1 as a new notification body (that is, body information), and display the information unit 2 as new notification auxiliary information (that is, auxiliary information of the body information). When there are more than four character strings, an upper and lower structure may be used, and when there are less than four character strings, a left and right structure may be used.

Example: As shown in FIG. 4, the notification information is "The express driver (Guangdong BDTXXXX) is in a hurry to come. Please be patient. If you no longer need this ride, you can cancel it before 22:04". The cleaned field 1 includes: field 1a "Guangdong BDTXXXX", and field 1b "22:04"; and the cleaned field 2 includes: field 2a "driver", field 2b "is in a hurry to come", and field 2c "cancel before". The screened information unit 1 is "Guangdong BDTXXXX" (there is no repeated field 1, and the one that first occurs is selected as the information unit 1), and the screened information unit 2 is "The driver is in a hurry to come". The refactored information includes "Guangdong BDTXXXX (which can further be displayed as TXXXX when displayed)" and "The driver is in a hurry to come" that are distributed up and down.

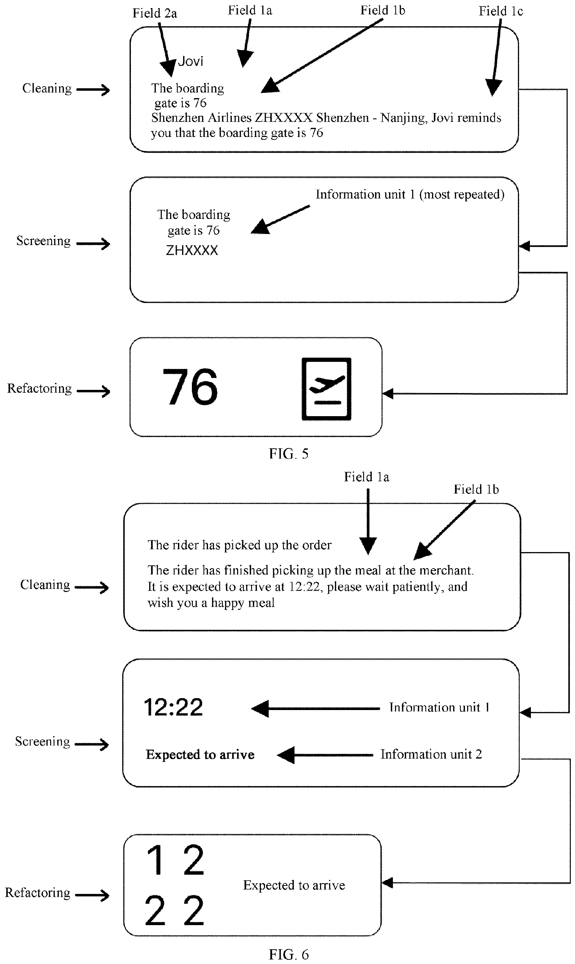

As shown in FIG. 5, the notification information is "The boarding gate is 76. Shenzhen Airlines ZHXXXX Shenzhen→Nanjing, Jovi reminds you that the boarding gate is 76". The cleaned field 1 includes: field 1a "76", field 1b "ZHXXXX", and field 1c "76"; and the cleaned field 2 includes: field 2a "boarding gate". The screened information unit 1 is "The boarding gate is 76" (most repeated in the field 1), and there is no information unit 2. The refactored information includes "The boarding gate is 76" that is distributed left and right, and the "boarding gate" can further be represented graphically, as shown in FIG. 5.

As shown in FIG. 6, the notification information is "The rider has picked up the order. The rider has finished picking up the meal at the merchant. It is expected to arrive at 12:22, please wait patiently, and wish you a happy meal". The cleaned field 1 includes: field 1a "12:22"; and the cleaned field 2 includes: field 2a "expected", and field 2b "arrive". The screened information unit 1 is "12:22" (there is no repeated field 1, and the one that first occurs is selected as the information unit 1), and the screened information unit 2 is "expected to arrive". The refactored information includes "12", "22", and "expected to arrive" that are distributed left and right.

### Step 33: Pushed to the user in different regions.

Optimized notifications can be displayed in a notification center and desktop (that is, a desktop interface).

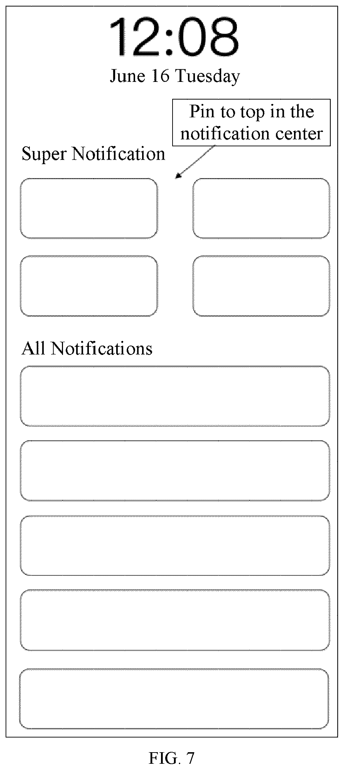

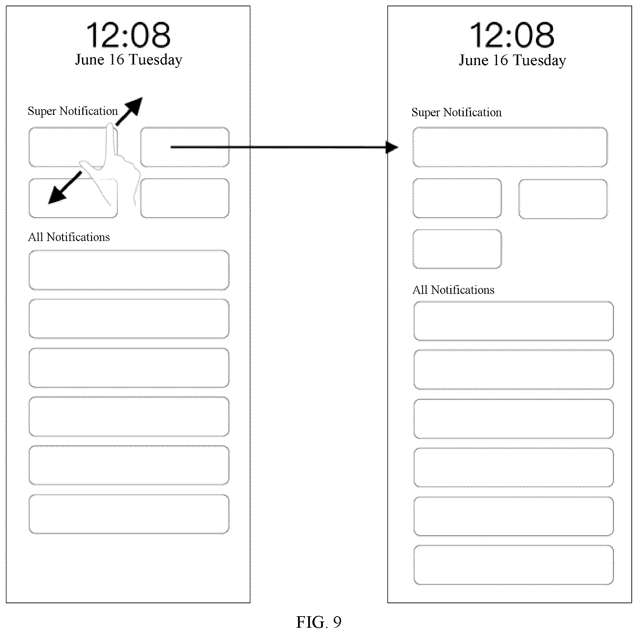

Notification center: Optimization notifications may replace old notifications, and can be displayed at the top of the notification center in a form of a small card, as shown in the super notification (that is, the optimization notification) in FIG. 7. The user can restore the notification by clicking or unfolding with two fingers, which is to display a complete notification, as shown in FIG. 9.

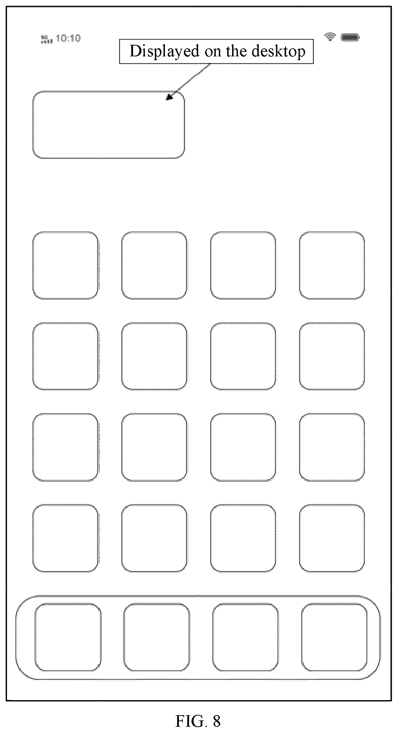

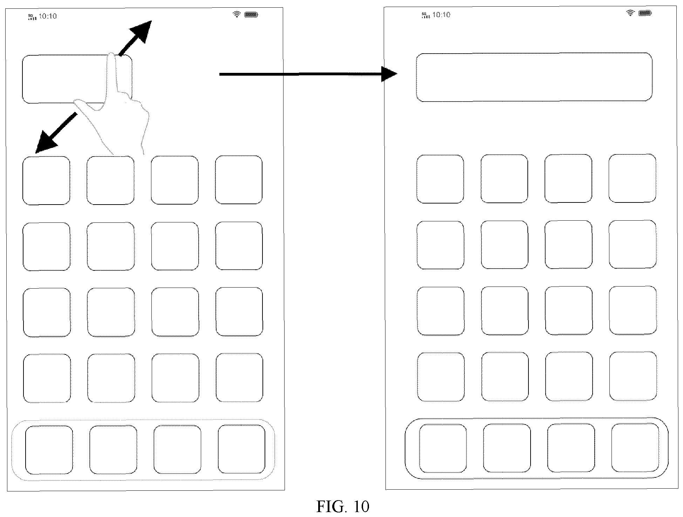

Desktop: The optimization notification can be displayed on the desktop, as shown in FIG. 8, the optimization notification can be displayed in a time pendant region, and a time pendant may be covered when the optimization notification appears. The user can restore the notification by clicking or unfolding with two fingers, which is to display a complete notification, as shown in FIG. 10.

The solutions provided in the embodiments of this application are illustrated below with examples.

### Example I: Online ride-hailing

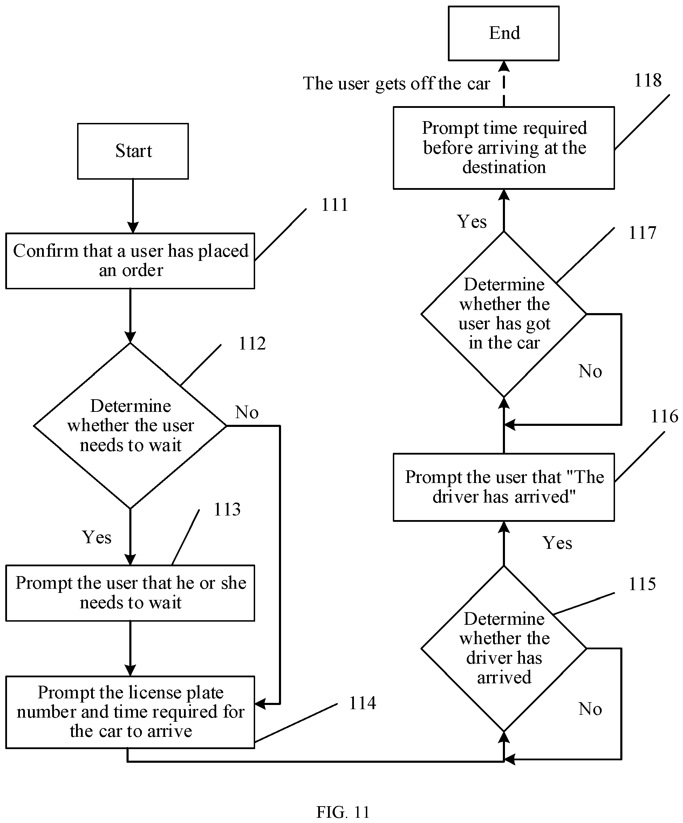

An online ride-hailing process can be shown in FIG. 11, including:
Step 111: Confirm that a user has placed an order;
Step 112: Determine whether the user needs to wait, if yes, go to step 113, and if not, go to step 114;
Step 113: Prompt the user that he or she needs to wait;
Step 114: Prompt the license plate number and time required for the car to arrive;
Step 115: Determine whether the driver has arrived, if yes, go to step 116, and if not, continue to perform step 115;
Step 116: Prompt the user that "The driver has arrived";
Step 117: Determine whether the user has got in the car, if yes, go to step 118, and if not, continue to perform step 117;
Step 118: Prompt time required before arriving at the destination, and subsequently the user gets off the car. After the transaction is completed, the process ends.

It can be seen from the above that the online ride-hailing notification information is generally divided into four types:
A) Wait time for calling a car;
B) The license plate number and pick-up time after a driver accepts the order;
C) The driver arrives;
D) Time before arriving at the destination.

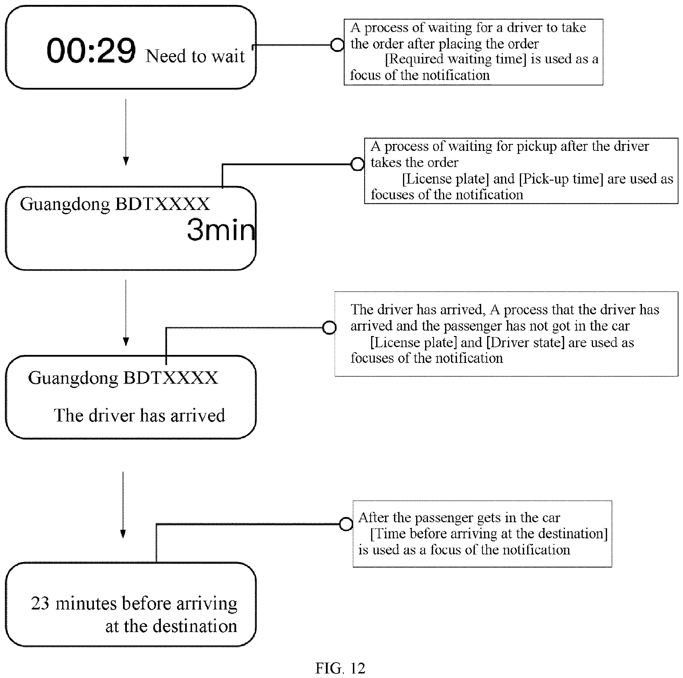

Assuming that based on the foregoing notification information, the processing of cleaning, screening and refactoring the notification content is performed. The processed information is shown in FIG. 12. The information in FIG. 12 can be displayed in a same region at different time periods, so as to realize the dynamic display of a notification information of a same event. The license plate number in FIG. 12 can further only be displayed as "TXXXX".

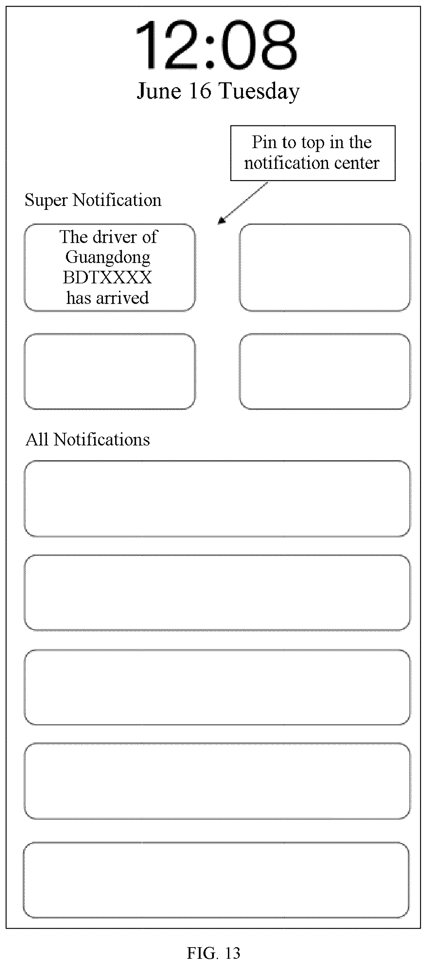

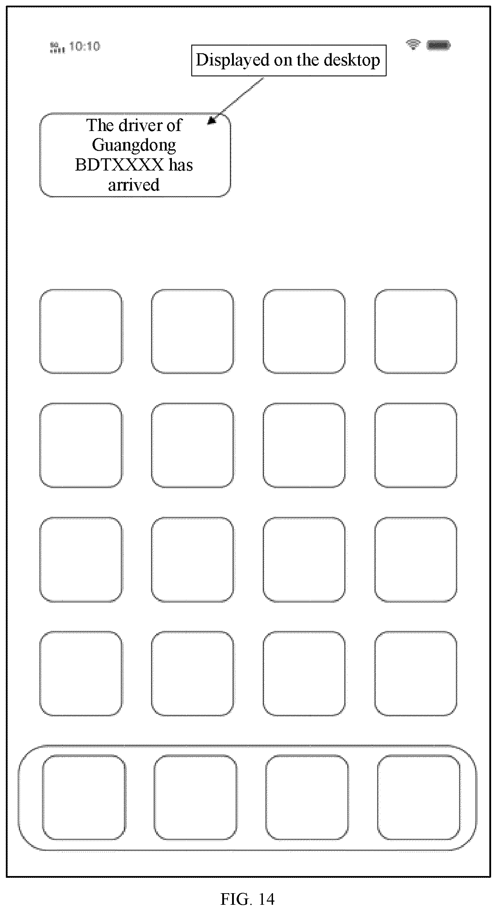

Subsequently, the information in FIG. 12 can be pushed to the user in different regions (notification center and desktop), for example, the information is displayed on the notification center as shown in FIG. 13, or the information is displayed on the desktop as shown in FIG. 14.

### Example II: Airplane ticketing (that is, airplane boarding)

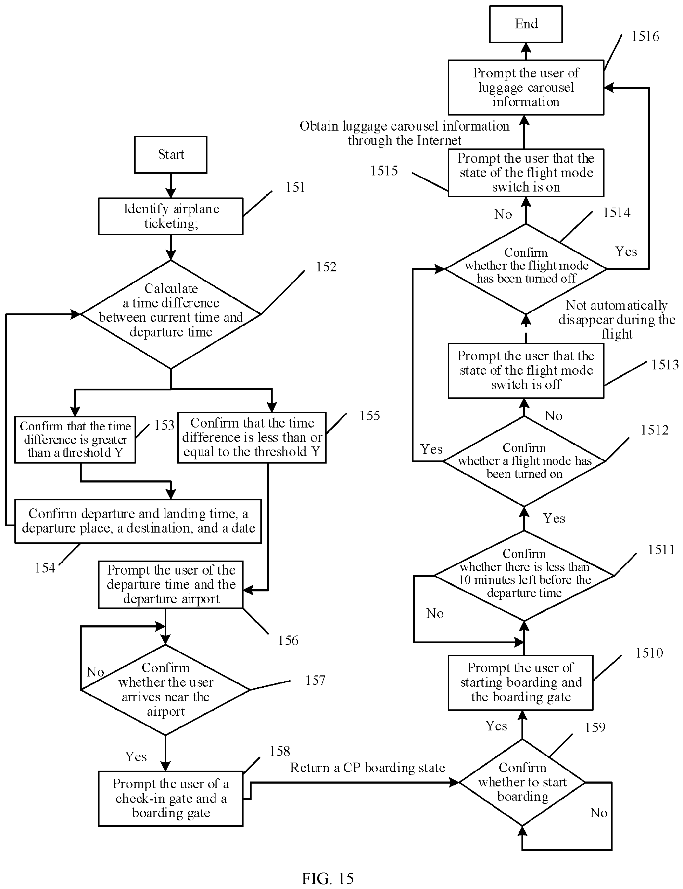

An airplane boarding process can be shown in FIG. 15, including:
Step 151: Identify airplane ticketing;
Specifically, identify a text message of the airplane ticketing and/or adding a schedule;
Step 152: Calculate a time difference between current time and departure time; Go to step 153 or step 155;
Step 153: Confirm that the time difference is greater than a threshold Y, and go to step 154; Y=Required time for the user to drive from a current position to a departure airport + 1.5 h;
Step 154: Confirm departure and landing time, a departure place, a destination, and a date, and return to step 152;
Step 155: Confirm that the time difference is less than or equal to the threshold Y, and go to step 156;
Step 156: Prompt the user of the departure time and the departure airport;
Step 157: Confirm whether the user arrives near the airport, if yes, go to step 158, and if not, continue to perform step 157;
Step 158: Prompt the user of a check-in gate and a boarding gate;
Step 159: After a CP (content provider) boarding state is returned, confirm whether to start boarding; if yes, go to step 1510, and if not, continue to perform step 159;
Step 1510: Prompt the user of starting boarding and the boarding gate;
Step 1511: Confirm whether there is less than 10 minutes left before the departure time, if yes, go to step 1512, and if not, continue to perform step 1511;
Step 1512: Confirm whether a flight mode has been turned on, if yes, wait for the airplane to land and go to step 1514, and if not, go to step 1513.
Step 1513: Prompt the user that a state of a flight mode switch is off, and wait for the airplane to land, and then go to step 1514;
The information prompting the user in step 1531 may not automatically disappear during the flight.
Step 1514: When the airplane lands, confirm whether the flight mode has been turned off, if yes, go to step 1516, and if not, go to step 1515;
Step 1515: Prompt the user that the state of the flight mode switch is on; Subsequently, after turning off the flight mode, obtain luggage carousel information through the Internet, and go to step 1516;
Step 1516: Prompt the user of the luggage carousel information, and end the process after the user has picked up the luggage.

It can be seen from the above that a notification information of ticketing (train tickets, airline tickets, and the like) is generally divided into six types:
A) Before departure;
B) Depart for the station or airport;
C) Arrive at the station or airport;
D) Prepare for check-in or boarding;
E) During the itinerary (information of a flight mode can be prompted, such as the flight mode is not turned on, or the flight mode is turned on);
F) Arrive at the destination.

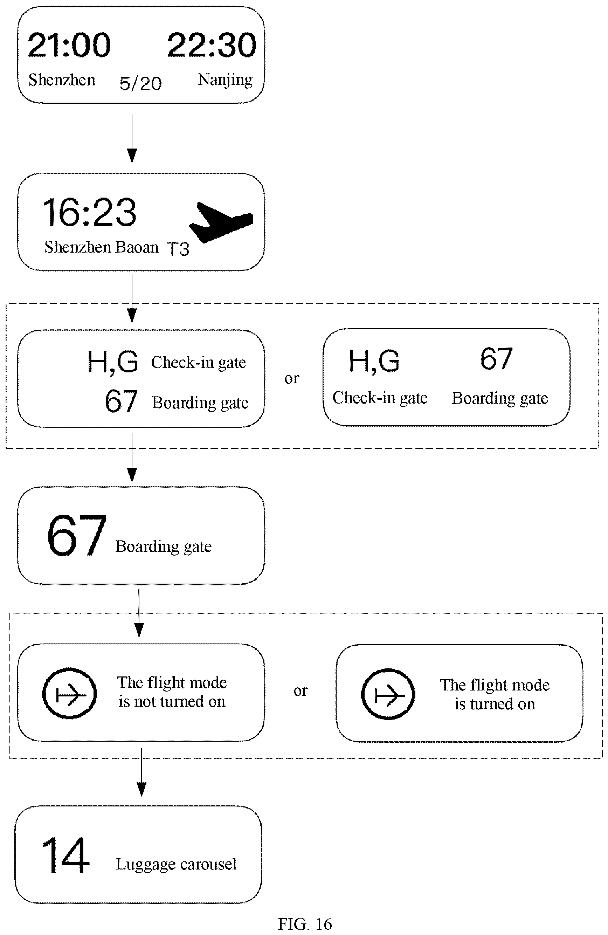

Assuming that based on the foregoing notification information, the processing of cleaning, screening, and refactoring the notification content is performed. The processed information is shown in FIG. 16. The information in FIG. 16 can be displayed in a same region at different time periods, so as to realize the dynamic display of a notification information of a same event.

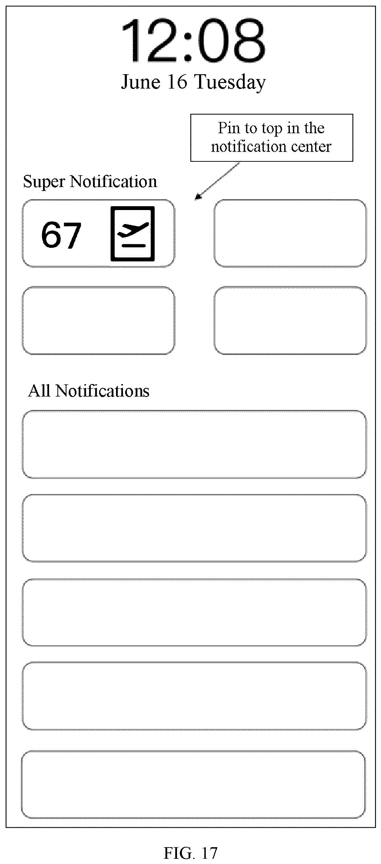

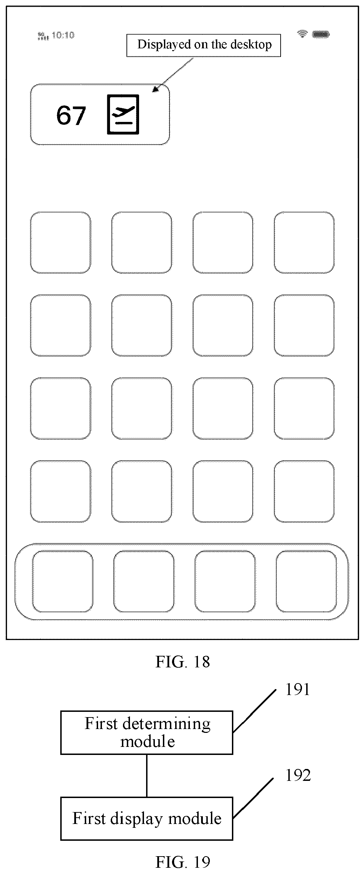

Subsequently, the information in FIG. 16 can be pushed to the user in different regions (notification center and desktop), for example, the information is displayed on the notification center as shown in FIG. 17, or the information is displayed on the desktop as shown in FIG. 18. The "boarding gate" can further be represented graphically, as shown in FIGs. 17 and 18.

It can be seen from the above that in the embodiments of this application, by extracting two "high frequency and just-needed" scenarios in the notification, scenario classification and information visualization design are carried out for the two scenarios, and then the two scenarios are pushed to the user in different scenarios by formulating corresponding rules, which can effectively solve current problems of information explosion, information redundancy, difficulty and low efficiency for the user to obtain information from notifications.

It is to be noted that the solutions provided in the embodiments of this application can further be applied to scenarios such as participating in a conference, watching a movie, and the like, which is not limited herein.

It should be noted that, the information display method provided in the embodiments of this application can be executed by an information display apparatus, or a control module configured to perform the information display method in the information display apparatus. In the embodiments of this application, an example in which the information display apparatus executes the information display method is used to illustrate the information display apparatus provided in the embodiments of this application.

The embodiments of this application further provide an information display apparatus, as shown in FIG. 19, including:
a first determining module 191, configured to determine a first body information and a first auxiliary information of a first notification information received; and
a first display module 192, configured to display, in a case that the first notification information and a second notification information previously received are associated with a same event, the first body information and the first auxiliary information in place of a second body information and a second auxiliary information of the second notification information.

Further, the information display apparatus further includes: a second determining module, configured to determine whether the first notification information is a preset information, before the display the first body information and the first auxiliary information in place of a second body information and a second auxiliary information of the second notification information, where the first display module includes: a first display submodule, configured to display the first body information and the first auxiliary information in place of a second body information and a second auxiliary information of the second notification information, in a case that the first notification information is the preset type information, and the first notification information and the second notification information previously received are associated with the same event.

The first determining module includes: a first obtaining submodule, configured to obtain a first preset information in the first notification information, where the first preset information includes digit information and/or letter information; and a processing submodule, configured to determine the first preset information most repeated in the first notification information as the first body information, or, determine the first preset information ranking first in the first notification information as the first body information.

Specifically, the first determining module includes: a second obtaining submodule, configured to obtain a second preset information adjacent to the first body information, where the second preset information includes at least one of a verb information, a conjunction information, or a particle information, and does not include an adjective information and an adverb information; and a second processing submodule, configured to determine the second preset information as the first auxiliary information of the first notification information.

Further, the information display apparatus further includes: a third determining module, configured to determine whether the second notification information is a preset type information, in a case that the second notification information is a notification information ranking first corresponding to the event, and before the determining a first body information and a first auxiliary information of a first notification information received; and a second display module, configured to display, in a case that the second notification information is the preset type information, the second body information and the second auxiliary information in a preset region, where the preset region includes at least one of a top region of a notification center interface or a preset display region of a desktop interface.

In the embodiments of this application, a first body information and a first auxiliary information of a first notification information received are determined; and in a case that the first notification information and a second notification information previously received are associated with a same event, the first body information and the first auxiliary information are displayed in place of a second body information and a second auxiliary information of the second notification information. In this way, a plurality of independent notifications of a same scene are sorted out, and the notifications are linked according to clues of scene changes, providing the user with a complete and dynamic notification information display solution. Information display logic is improved to provide the user with a scene-based information service, so as to reduce the costs of conveying information, avoid the display of unnecessary information, and make it more convenient for the user to use, thereby well solving the problems of redundancy and inconvenience for the user to find required information in existing information display solutions.

The information display apparatus in the embodiments of this application may be an apparatus, or may be a component, an integrated circuit, or a chip in a terminal. The apparatus may be a mobile electronic device or may be a non-mobile electronic device. For example, the mobile electronic device may be a mobile phone, a tablet computer, a notebook computer, a palmtop computer, an in-vehicle electronic device, a wearable device, an ultra-mobile personal computer (ultra-mobile personal computer, UMPC), a netbook, or a personal digital assistant (personal digital assistant, PDA); and the non-mobile electronic device may be a server, a network attached storage (Network Attached Storage, NAS), a personal computer (personal computer, PC), a television (television, TV), a teller machine, or an automated machine, which are not specifically limited in the embodiments of this application.

The information display apparatus in the embodiments of this application may be an apparatus having an operating system. The operating system may be an Android (Android) operating system, an IOS operating system, or another possible operating system. This is not specifically limited in the embodiments of this application.

The information display apparatus provided in the embodiments of this application can implement all processes implemented by the method embodiments of FIG. 1 to FIG. 18. To avoid repetition, details are not described herein again.

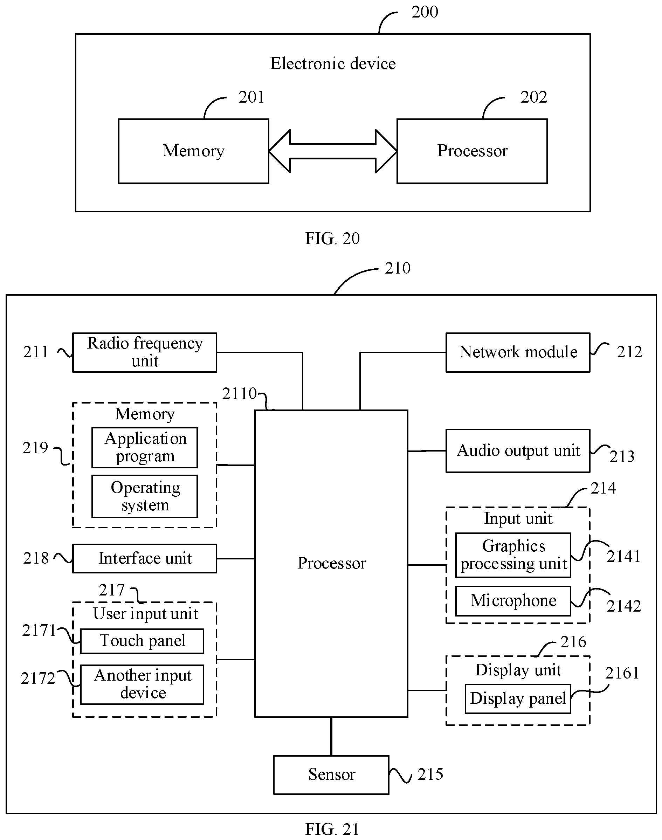

Optionally, as shown in FIG. 20, the embodiments of this application further provide an electronic device 200, including a processor 201, a memory 202, and a program or instruction stored on the memory 202 and executable on the processor 201. The program or instruction, when executed by the processor 201, implements all processes of the embodiments of the foregoing information display method, and can achieve the same technical effects. To avoid repetition, details are not described herein again.

It should be noted that, the electronic device in the embodiments of this application includes the foregoing mobile electronic device and non-mobile electronic device.

FIG. 21 is a schematic diagram of a hardware structure of an electronic device that implements the embodiments of this application.

The electronic device 210 includes but is not limited to: components such as a radio frequency unit 211, a network module 212, an audio output unit 213, an input unit 214, a sensor 215, a display unit 216, a user input unit 217, an interface unit 218, a memory 219, and a processor 2110.

A person skilled in the art may understand that the electronic device 210 further includes a power supply (such as a battery) for supplying power to the components. The power supply may logically connect to the processor 2110 by using a power supply management system, thereby implementing functions, such as charging, discharging, and power consumption management, by using the power supply management system. The structure of the electronic device shown in FIG. 21 constitutes no limitation on the electronic device, and the electronic device may include more or fewer components than those shown in the figure, or some components may be combined, or a different component deployment may be used. Details are not described herein again.

The processor 2110 is configured to determine a first body information and a first auxiliary information of a first notification information received; and
a display unit 216, configured to display, in a case that the first notification information and a second notification information previously received are associated with a same event, the first body information and the first auxiliary information in place of a second body information and a second auxiliary information of the second notification information.

In the embodiments of this application, a first body information and a first auxiliary information of a first notification information received are determined; and in a case that the first notification information and a second notification information previously received are associated with a same event, the first body information and the first auxiliary information are displayed in place of a second body information and a second auxiliary information of the second notification information. In this way, a plurality of independent notifications of a same scene are sorted out, and the notifications are linked according to clues of scene changes, providing the user with a complete and dynamic notification information display solution. Information display logic is improved to provide the user with a scene-based information service, so as to reduce the costs of conveying information, avoid the display of unnecessary information, and make it more convenient for the user to use, thereby well solving the problems of redundancy and inconvenience for the user to find required information in existing information display solutions.

Optionally, the processor 2110 is further configured to determine, before the replace a second body information and a second auxiliary information of the second notification information with the first body information and the first auxiliary information for display, whether the first notification information is a preset information; and
a display unit 216 is further configured to display the first body information and the first auxiliary information in place of a second body information and a second auxiliary information of the second notification information, in a case that the first notification information is the preset type information, and the first notification information and the second notification information previously received are associated with the same event.

Optionally, the processor 2110 is further configured to obtain a first preset information in the first notification information, where the first preset information includes digit information and/or letter information; and determine the first preset information most repeated in the first notification information as the first body information, or, determine the first preset information ranking first in the first notification information as the first body information.

Optionally, the processor 2110 is further configured to obtain a second preset information adjacent to the first body information, where the second preset information includes at least one of a verb information, a conjunction information, or a particle information, and does not include an adjective information and an adverb information; and determine the second preset information as the first auxiliary information of the first notification information.

Optionally, the processor 2110 is further configured to determine whether the second notification information is a preset type information, in a case that the second notification information is a notification information ranking first corresponding to the event, and before the determining a first body information and a first auxiliary information of a first notification information received; and
the display unit 216 is further configured to display, in a case that the second notification information is the preset type information, the second body information and the second auxiliary information in a preset region, where the preset region includes at least one of a top region of a notification center interface or a preset display region of a desktop interface.

This solution can improve a table and row form and display logic of the notification information, provide the user with a scene-based information service, and reduce the cost of information transmission.

It should be understood that, in the embodiments of this application, the input unit 214 may include a graphics processing unit (Graphics Processing Unit, GPU) 2141 and a microphone 2142. The graphics processing unit 2141 performs processing on image data of a static picture or a video that is obtained by an image acquisition apparatus (for example, a camera) in a video acquisition mode or an image acquisition mode. The display unit 216 may include a display panel 2161, for example, the display panel 2161 may be configured in a form such as a liquid crystal display or an organic light-emitting diode. The user input unit 217 includes a touch panel 2171 and another input device 2172. The touch panel 2171 is also referred to as a touch screen. The touch panel 2171 may include two parts: a touch detection apparatus and a touch controller. The another input device 2172 may include, but is not limited to, a physical keyboard, a functional key (such as a volume control key or a switch key), a track ball, a mouse, and a joystick, which are not described in detail herein. The memory 219 may be configured to store a software program and various data, including but are not limited to an application program and an operating system. The processor 2110 may integrate an application processor and a modem. The application processor mainly processes an operating system, a user interface, an application program, and the like. The modem mainly processes wireless communication. It may be understood that the foregoing modem may either not be integrated into the processor 2110.

An embodiment of this application further provides a readable storage medium, storing a program or instruction. The program or instruction, when executed by a processor, implements all processes of the embodiments of the foregoing information display method, and can achieve the same technical effects. To avoid repetition, details are not described herein again.

The processor is the processor in the electronic device in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, including: a processor and a communication interface, where the communication interface is coupled to the processor, and the processor is configured to run a program or instruction, to implement all processes of the embodiments of the above information display method, and can achieve the same technical effects. To avoid repetition, details are not described herein again.

It should be understood that, the chip mentioned in this embodiment of this application may also be referred to as a system-level chip, a system chip, a chip system, a system on chip, or the like.

It should be noted that, the terms "include", "comprise", or any other variation thereof in this specification is intended to cover a non-exclusive inclusion, making a process, method, article or apparatus including a series of elements include not only those elements, but also other elements not expressly listed, or further elements inherent to such process, method, article or apparatus. Without more limitations, elements defined by the sentence "including one" does not exclude that there are still other same elements in the processes, methods, objects, or apparatuses. In addition, it should be noted that, the scopes of the method and apparatus in the implementations of this application are not limited to performing functions in the order shown or discussed, and further includes performing the functions in a substantially simultaneous manner or in reverse order according to the functions involved. For example, the described method may be performed according to a sequence different from the described sequence, and various steps may further be added, omitted, or combined. In addition, features described with reference to some examples may be combined in other examples.

A person of ordinary skill in the art may notice that the exemplary units and algorithm steps described with reference to the embodiments disclosed in this specification can be implemented in electronic hardware, or a combination of computer software and electronic hardware. Whether the functions are executed in a mode of hardware or software depends on particular applications and design constraint conditions of the technical solutions. A person skilled in the art may use different methods to implement the described functions for each particular application, but it should not be considered that the implementation goes beyond the scope of the present disclosure.

A person skilled in the art can clearly understand that for convenience and conciseness of description, for specific working processes of the foregoing described system, apparatus and unit, reference may be made to the corresponding processes in the foregoing method embodiments, and details are not described herein.

In the embodiments provided in this application, it is to be understood that the disclosed apparatus and method may be implemented in other manners. For example, the described apparatus embodiment is merely exemplary. For example, the unit division is merely a logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electric, mechanical, or other forms.

The units described as separate components may or may not be physically separated, and the components displayed as units may or may not be physical units, and may be located in one place or may be distributed over a plurality of network units. Some or all of the units may be selected according to actual needs to achieve the objectives of the solutions of the embodiments.

In addition, functional units in the embodiments of the present disclosure may be integrated into one processing unit, or each of the units may be physically separated, or two or more units may be integrated into one unit.

Through the descriptions of the foregoing implementations, a person skilled in the art may clearly understand that the methods in the foregoing embodiments may be implemented by means of software and a necessary general hardware platform, and certainly, may further be implemented by hardware, but in many cases, the former manner is a better implementation. Based on such understanding, the technical solutions of this application or a part thereof that makes a contribution to the prior art may be essentially embodied in a form of a software product. The computer software product is stored in a storage medium (such as a ROM/RAM, a disk, and an optical disk), including several instructions to enable one terminal (which may be a mobile phone, a computer, a server, an air conditioner a network device, or the like) to perform the methods in the embodiments of this application.

It may be understood that, the embodiments described in the embodiments of the present disclosure may be implemented by using software, hardware, firmware, middleware, microcode, or a combination thereof. For hardware implementation, modules, units, and subunits may be implemented by one or more application specific integrated circuits (Application Specific Integrated Circuits, ASIC), digital signal processors (Digital Signal Processor, DSP), digital signal processor devices (DSP Device, DSPD), programmable logic devices (Programmable Logic Device, PLDs), field-programmable gate arrays (Field-Programmable Gate Array, FPGA), general-purpose processors, controllers, microcontrollers, microprocessors, other electronic components configured to implement the functions of the present disclosure, or a combination thereof.

For implementation by software, the technologies in the embodiments may be implemented by performing the functional modules (for example, a process and a function) in the embodiments of the present disclosure. Software code may be stored in a memory and executed by a processor. The memory may be implemented inside or outside the processor.

The embodiments of this application are described above with reference to the accompanying drawings. However, this application is not limited to the foregoing specific implementations. The foregoing specific implementations are illustrative instead of limitative. Enlightened by this application, a person of ordinary skill in the art may make many forms without departing from the idea of this application and the scope of protection of the claims. All of the forms fall within the protection of this application.

## Claims

1. An information display method, comprising:
determining a first body information and a first auxiliary information of a first notification information received; and
displaying, in a case that the first notification information and a second notification information previously received are associated with a same event, the first body information and the first auxiliary information in place of a second body information and a second auxiliary information of the second notification information.

2. The information display method according to claim 1, wherein before the displaying the first body information and the first auxiliary information in place of a second body information and a second auxiliary information of the second notification information, the method further comprises:
determining whether the first notification information is a preset information; and
the displaying, in a case that the first notification information and a second notification information previously received are associated with a same event, the first body information and the first auxiliary information in place of a second body information and a second auxiliary information of the second notification information comprises:
displaying the first body information and the first auxiliary information in place of the second body information and the second auxiliary information of the second notification information, in a case that the first notification information is a preset type information, and the first notification information and the second notification information previously received are associated with the same event.

3. The information display method according to claim 1, wherein the determining a first body information of a first notification information received comprises:
obtaining a first preset information in the first notification information, wherein the first preset information comprises digit information and/or letter information; and
determining the first preset information most repeated in the first notification information as the first body information, or, determining the first preset information ranking first in the first notification information as the first body information.

4. The information display method according to claim 1 or 3, wherein the determining a first auxiliary information of a first notification information received comprises:
obtaining a second preset information adjacent to the first body information, wherein the second preset information comprises at least one of a verb information, a conjunction information, or a particle information, and does not comprise an adjective information and an adverb information; and
determining the second preset information as the first auxiliary information of the first notification information.

5. The information display method according to claim 1, wherein in a case that the second notification information is a notification information ranking first corresponding to the event, and before the determining a first body information and a first auxiliary information of a first notification information received, the method further comprises:
determining whether the second notification information is a preset type information; and
displaying, in a case that the second notification information is the preset type information, the second body information and the second auxiliary information in a preset region; wherein
the preset region comprises at least one of a top region of a notification center interface or a preset display region of a desktop interface.

6. An information display apparatus, comprising:
a first determining module, configured to determine a first body information and a first auxiliary information of a first notification information received; and
a first display module, configured to display, in a case that the first notification information and a second notification information previously received are associated with a same event, the first body information and the first auxiliary information in place of a second body information and a second auxiliary information of the second notification information.

7. The information display apparatus according to claim 6, further comprising:
a second determining module, configured to determine whether the first notification information is a preset information, before the display the first body information and the first auxiliary information in place of a second body information and a second auxiliary information of the second notification information, wherein
the first display module comprises:
a first display submodule, configured to display the first body information and the first auxiliary information in place of a second body information and a second auxiliary information of the second notification information, in a case that the first notification information is the preset type information, and the first notification information and the second notification information previously received are associated with the same event.

8. The information display apparatus according to claim 6, wherein the first determining module comprises:
a first obtaining submodule, configured to obtain a first preset information in the first notification information, wherein the first preset information comprises digit information and/or letter information; and
a processing submodule, configured to determine the first preset information most repeated in the first notification information as the first body information, or, determine the first preset information ranking first in the first notification information as the first body information.

9. The information display apparatus according to claim 6 or 8, wherein the first determining module comprises:
a second obtaining submodule, configured to obtain a second preset information adjacent to the first body information, wherein the second preset information comprises at least one of a verb information, a conjunction information, or a particle information, and does not comprise an adjective information and an adverb information; and
a second processing submodule, configured to determine the second preset information as the first auxiliary information of the first notification information.

10. The information display apparatus according to claim 6, further comprising:
a third determining module, configured to determine whether the second notification information is a preset type information, in a case that the second notification information is a notification information ranking first corresponding to the event, and before the determining a first body information and a first auxiliary information of a first notification information received; and
a second display module, configured to display, in a case that the second notification information is the preset type information, the second body information and the second auxiliary information in a preset region, wherein
the preset region comprises at least one of a top region of a notification center interface or a preset display region of a desktop interface.

11. An electronic device, comprising a processor, a memory, and a program or instruction stored in the memory and executable on the processor, the program or instruction, when executed by the processor, implementing steps of the information display method according to any one of claims 1 to 5.

12. A readable storage medium, storing a program or instruction, the program or instruction, when executed by a processor, implementing steps of the information display method according to any one of claims 1 to 5.

13. A chip, comprising a processor and a communication interface, wherein the communication interface is coupled to the processor, and the processor is configured to run a program or instruction, to implement the information display method according to any one of claims 1 to 5.

14. A computer software product, stored in a non-volatile storage medium, and the software product is configured to be executed by at least one processor to implement steps of the information display method according to any one of claims 1 to 5.

15. An electronic device, configured to perform the information display method according to any one of claims 1 to 5.
